# DEMANDE DE BREVET EUROPEEN

(11) **EP 0 738 773 A1**
(43) Date de publication de la demande: **23.10.1996**
(21) Numéro de dépôt: 96400689.4
(22) Date de dépôt: 29.03.1996
(51) Int. Cl.: C09K 5/04, C09K 3/30, C11D 7/50

(54) **Mélanges pseudo-azéotropiques à base de difluorométhane et de pentafluoroéthane, et leurs applications comme fluides frigorigènes**

(30) Priorité: 20.04.1995 FR 9504724
(71) Demandeur: ELF ATOCHEM S.A., 92800 Puteaux (FR)
(72) Inventeur: Macaudiere, Sylvie, 92600 Asnieres (FR)
(74) Mandataire: Leboulenger, Jean

(57) **Abrégé**

Pour remplacer le chlorodifluorométhane dans les systèmes de réfrigération ou de conditionnement d'air, l'invention propose d'utiliser comme fluide frigorigène un mélange contenant du difluorométhane, du pentafluoroéthane et au moins un composé fluoré choisi dans le groupe constitué par le perfluoropropane, le 1,1,1,2,3,3,3 (ou 1,1,1,2,2,3,3)-heptafluoropropane, le 1,1,1,2,2-pentafluoropropane, le méthyl trifluorométhyléther et le pentafluorodiméthyléther.

## Description

La présente invention concerne le domaine de la réfrigération et a plus particulièrement pour objet des mélanges pseudo-azéotropiques de fluides frigorigènes n'ayant pas ou peu d'action sur l'environnement, pour remplacer les chlorofluorocarbures (CFC) ou hydrochlorofluorocarbures (HCFC) dans les systèmes de réfrigération ou de conditionnement d'air (air conditionné ou pompe à chaleur).

Dans les systèmes exploités en conditionnement d'air, on opère selon un cycle thermodynamique défini généralement par une température d'évaporation comprise entre 0 et 10°C (le plus souvent 7°C), une température de condensation entre 30 et 60°C, un sous-refroidissement du liquide de l'ordre de - 5°C et une surchauffe des vapeurs d'au moins 10°C.

Le fluide frigorigène couramment utilisé en conditionnement d'air est le chlorodifluorométhane (appelé HCFC-22). Or, il est maintenant établi qu'à cause de leur action sur l'ozone, les HCFC et en particulier le HCFC-22, devront à plus ou moins longue échéance être remplacés par des fluides frigorigènes n'ayant plus d'action sur la couche d'ozone.

Pour remplacer le HCFC-22 dans les installations de conditionnement d'air, le substitut doit présenter des propriétés thermodynamiques (en particulier une capacité frigorifique) égales à, voire meilleures que, celles du HCFC-22 et ceci tout en conservant une bonne efficacité et des niveaux de pression raisonnables. D'autre part, pour la bonne stabilité du produit et la durabilité du matériel, il est souhaitable que la température de refoulement n'excède pas celle du HCFC-22 de plus de 5°C environ. Enfin, pour minimiser les problèmes de distillation dans le circuit et de maintenance, il est souhaitable que le mélange présente un comportement pseudo-azéotropique.

Le difluorométhane (HFC-32) et le pentafluoroéthane (HFC-125) n'ont, comparativement aux CFC et HCFC, aucune action sur l'ozone.

Le HFC-32 présente l'inconvénient majeur d'être inflammable. Le HFC-125, composé ininflammable, est un bon fluide frigorigène mais sa trop faible efficacité énergétique rend son emploi difficile comme substitut au HCFC-22, en tant que produit pur.

Les mélanges binaires de HFC-32 et de HFC-125 selon la publication WO 9211338 conduisent à un bon compromis en terme d'efficacité et de capacité frigorifique, mais ces mélanges présentent des augmentations de pressions très importantes qui nécessitent de profondes modifications des systèmes de réfrigération et de conditionnement d'air.

II a maintenant été trouvé que les mélanges contenant du difluorométhane, du pentafluoroéthane, et au moins un composé choisi parmi les fluides du Tableau 1 suivant présentent un comportement pseudo-azéotropique.

**TABLEAU 1**

| **Fluide frigorigène** | **Nom chimique** | **Point d'ébullition (°C)** |
|---|---|---|
| FC-218 | Octafluoropropane | -36,7 |
| E-143a | Méthyl trifluorométhyl éther | -24,2 |
| HFC-227ea | 1,1,1,2,3,3,3-heptafluoropropane | -18,3 |
| HFC-227ca | 1,1,1,2,2,3,3-heptafluoropropane | - 16,3 |
| HFC-245cb | 1,1,1,2,2-pentafluoropropane | -18,3 |
| E-125 | pentafluorodiméthyléther | -36 |

Les compositions selon l'invention ont été choisies de telle sorte que les mélanges présentent un comportement pseudo-azéotropique, une forte capacité frigorifique, et une diminution de la tension de vapeur par rapport aux mélanges binaires HFC-32/HFC-125.

Les mélanges selon l'invention peuvent donc être utilisés dans les systèmes d'air conditionné, notamment pour le remplacement du HCFC-22.

Parmi les mélanges selon l'invention, les mélanges tout particulièrement préférés ont les compositions pondérales suivantes :
■ 5 à 50 % (de préférence 5 à 35 %) de HFC-32, 10 à 75 % (de préférence 35 à 75 %) de HFC-125 et 5 à 60 % (de préférence 5 à 45 %) de FC 218.
■ 5 à 90 % (de préférence 5 à 50 %) de HFC-32, 5 à 90 % (de préférence 35 à 90 %) de HFC-125, et de 1 à 15 % de HFC-227ea.
■ 5 à 90 % (de préférence 5 à 50 %) de HFC-32, 5 à 90 % (de préférence 30 à 90 %) de HFC-125, et de 1 à 25 % (de préférence 1 à 20 %) de HFC-227ca.
■ 10 à 90 % (de préférence 10 à 50 %) de HFC-32, 5 à 90 % (de préférence 35 à 90 %) de HFC-125, et de 1 à 15 % de HFC-245cb.
■ 20 à 90 % (de préférence 20 à 35 %) de HFC-32, 1 à 70 % (de préférence 45 à 70 %) de HFC-125 et de 1 à 20 % de E-143a.
■ 5 à 90 % (de préférence de 10 à 50 %) de HFC-32, 5 à 90 % (de préférence 5 à 80 %) de HFC-125 et de 5 à 70 % (de préférence 10 à 60 %) de E-125.

Les exemples suivants illustrent l'invention sans la limiter.

### EXEMPLE 1

Le Tableau 2 donne l'écart entre les températures de bulle (Tb) et de rosée (Tr) à pression atmosphérique de différents mélanges ternaires de HFC-32, HFC-125 et d'un composé A choisi parmi les FC-218, HFC-227ea, HFC-227ca, HFC-245cb, E-143a et E-125.

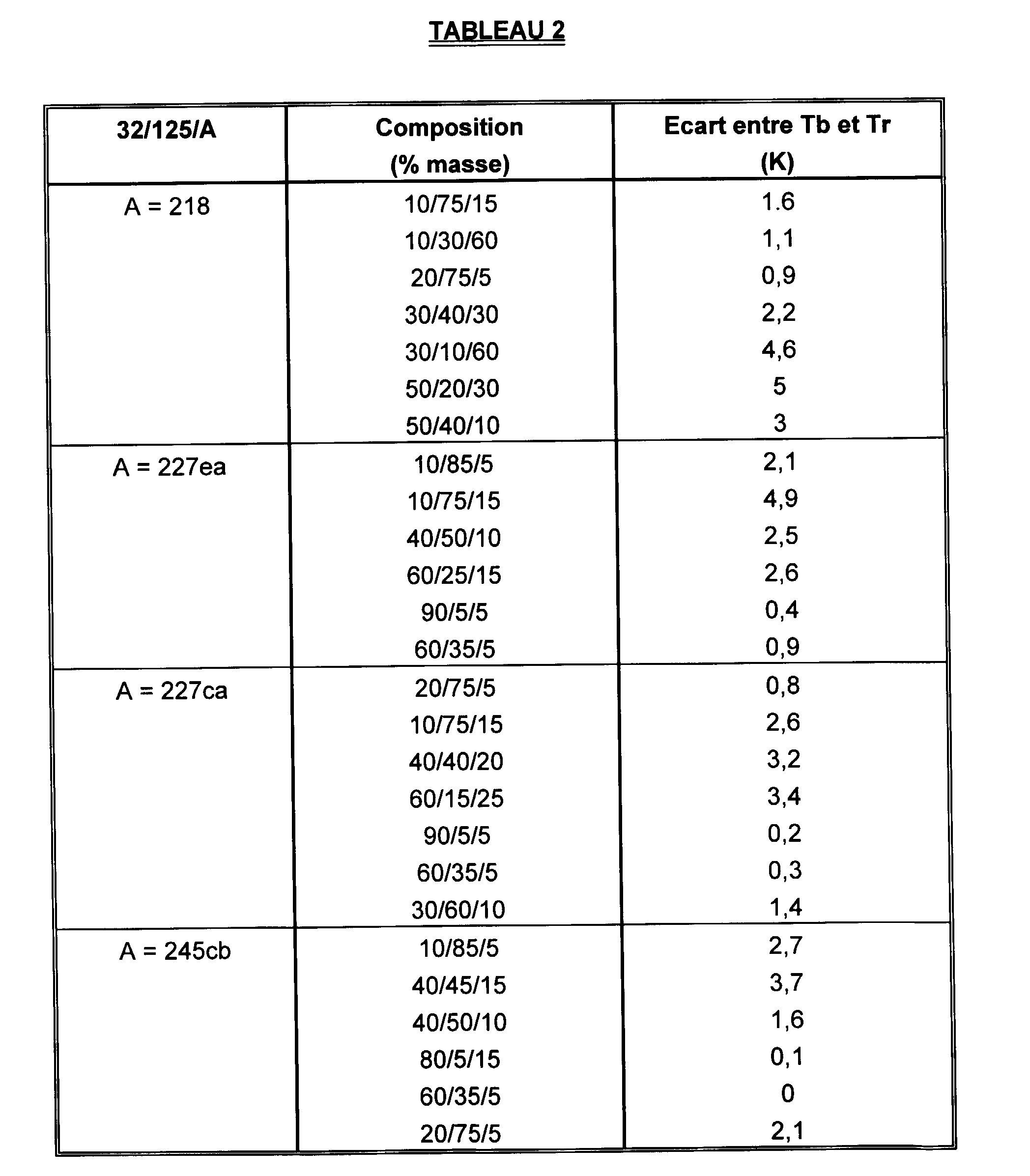

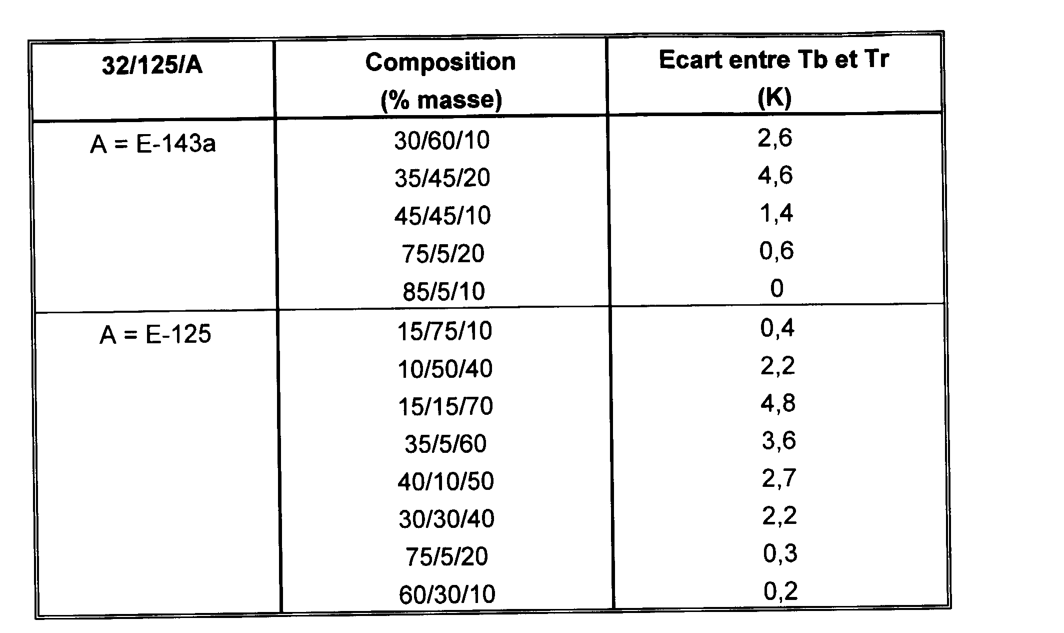

Les données indiquées montrent un faible écart entre la température de bulle et de rosée à pression atmosphérique, ce qui confirme la pseudo-azéotropie des mélanges étudiés.

### EXEMPLE 2

Cet exemple illustre l'utilisation des mélanges selon l'invention comme fluides frigorigènes. Leurs performances thermodynamiques ont été comparées à celles du HCFC-22 pour un cycle thermodynamique défini comme suit :
■ Température de condensation 43°C
■ Température d'évaporation 7°C
■ Température entrée compresseur 18°C
■ Sous-refroidissement liquide - 5K

Le Tableau 3 résume les performances thermodynamiques observées dans ces conditions pour différents mélanges selon l'invention.

**TABLEAU 3**

| **Mélanges (% masse)** | **Capacité* %** | **Efficacité* %** | **Pression de condensation (bar)** |
|---|---|---|---|
| 32/125/ 218 | | | |
| 10/75/15 | + 18 | - 12,2 | 23,9 |
| 20/75/5 | + 28 | - 10,3 | 24,9 |
| 32/125/227ea | | | |
| 10/85/5 | + 16 | - 9,8 | 22,5 |
| 40/50/10 | + 34 | - 7,7 | 24,7 |
| 20/75/5 | + 24 | - 9,2 | 23,8 |
| 32/125/227ca | | | |
| 10/85/5 | + 17 | - 10,2 | 23 |
| 20/75/5 | + 26 | - 9,5 | 24,1 |
| 30/60/10 | + 31 | - 8,7 | 24,6 |
| 40/40/20 | + 32 | - 7,9 | 24,3 |
| 32/125/245cb | | | |
| 10/85/5 | + 15 | - 9,7 | 22,5 |
| 20/75/5 | + 25 | - 9,2 | 23,8 |
| 30/60/10 | + 30 | - 8,5 | 24,3 |
| 40/45/15 | + 34 | - 8,1 | 24,8 |
| 32/125/E-143a | | | |
| 45/45/10 | + 39 | - 7,5 | 25,3 |
| 35/45/20 | + 28 | - 7 | 23,4 |
| 22/55/20 | + 21 | - 6,9 | 22,2 |
| 32/125/E-125 | | | |
| 10/50/40 | + 12 | - 10 | 21,9 |
| 15/75/10 | + 22 | - 10,1 | 23,8 |
| 40/10/50 | + 29 | - 7 | 23,5 |
| 35/5/60 | + 23 | - 6,6 | 22,4 |

| | | | |
|---|---|---|---|
| * Relativement au HCFC-22 | | | |

## Revendications

1. Mélange pseudo-azéotropique contenant du difluorométhane (HFC-32), du pentafluoroéthane (HFC-125) et au moins un composé choisi dans le groupe constitué par le perfluoropropane (FC-218), le 1,1,1,2,3,3,3-heptafluoropropane (HFC-227 ea), le 1,1,1,2,2,3,3-heptafluoropropane (HFC-227 ca), le 1,1,1,2,2-pentafluoropropane (HFC-245 cb), le méthyl trifluorométhyl éther (E-143a) et le pentafluorodiméthyléther (E-125).

2. Mélange selon la revendication 1 contenant en masse 5 à 50 % de HFC-32, 10 à 75 % de HFC-125 et 5 à 60 % de FC-218.

3. Mélange selon la revendication 1 contenant en masse 5 à 90 % de HFC-32, 5 à 90 % de HFC-125 et 1 à 15 % de HFC-227ea.

4. Mélange selon la revendication 1 contenant en masse 5 à 90 % de HFC-32, 5 à 90 % de HFC-125 et 1 à 25 % de HFC-227ca.

5. Mélange selon la revendication 1 contenant en masse 10 à 90 % de HFC-32, 5 à 90 % de HFC-125 et 1 à 15 % de HFC-245cb.

6. Mélange selon la revendication 1 contenant en masse 20 à 90 % de HFC-32, 1 à 70 % de HFC-125 et 1 à 20 % de E-143a.

7. Mélange selon la revendication 1 contenant en masse 5 à 90 % de HFC-32, 5 à 90 % de HFC-125 et 5 à 70 % de E-125

8. Mélange selon la revendication 2 contenant en masse 5 à 35 % de HFC-32, 35 à 75 % de HFC-125 et 5 à 45 % de FC-218.

9. Mélange selon la revendication 3 contenant en masse 5 à 50 % de HFC-32, 35 à 90 % de HFC-125 et 1 à 15 % de HFC-227ea

10. Mélange selon la revendication 4 contenant en masse 5 à 50 % de HFC-32, 30 à 90 % de HFC-125 et 1 à 20 % de HFC-227ca.

11. Mélange selon la revendication 5 contenant en masse 10 à 50 % de HFC-32, 35 à 90 % de HFC-125 et 1 à 15 % de HFC-245cb.

12. Mélange selon la revendication 6 contenant en masse 20 à 35 % de HFC-32, 45 à 70 % de HFC-125 et 1 à 20 % de E-143a.

13. Mélange selon la revendication 7 contenant en masse 10 à 50 % de HFC-32, 5 à 80 % de HFC-125 et 10 à 60 % de E-125.

14. Utilisation d'un mélange selon l'une des revendications 1 à 13 comme fluide frigorigène pour la réfrigération ou le conditionnement de l'air.
